# NEUE EUROPÄISCHE PATENTSCHRIFT

(11) **EP 0 642 206 B2**
(45) Veröffentlichungstag und Bekanntmachung des Hinweises auf die Entscheidung über den Einspruch: **03.01.2001**
(45) Hinweis auf die Patenterteilung: 05.03.1997
(21) Anmeldenummer: 94113476.9
(22) Anmeldetag: 30.08.1994
(51) Int. Cl.: H02K 5/24, F04D 29/66, F16F 15/08

(54) **Halterung für einen Elektromotor, insbesondere für ein Gebläserad einer Heizungs- oder Klimaanlage**
Support for an electric motor, particularly for a fan of a heating or air conditioning system
Support pour un moteur électrique, en particulier pour un ventilateur d'un appareil de chauffage ou de climatisation

(30) Priorität: 03.09.1993 DE 4329804
(43) Veröffentlichungstag der Anmeldung: 08.03.1995
(73) Patentinhaber: Behr GmbH & Co., D-70469 Stuttgart (DE)
(72) Erfinder: Fischinger, Claus-Dieter, D-75365 Calw (DE); Hizli, Adem, Dipl.-Ing. (FH), D-70376 Stuttgart (DE); Rose, Wolfgang, Dipl.-Ing., D-71287 Weissach (DE); Waldmann, Heinrich, Dipl.-Ing. (FH), D-70372 Stuttgart (DE)
(74) Vertreter: Dauster, Hanjörg, Dipl.-Ing.

(56) Entgegenhaltungen:
- DE-A- 2 444 573
- DE-A- 4 306 588
- DE-C- 911 926
- DE-U- 9 108 745
- FR-A- 1 521 494
- US-A- 2 826 305
- US-A- 3 775 029
- PATENT ABSTRACTS OF JAPAN vol. 12, no. 274 (M-725) 29. Juli 1988 & JP-A-63 057 311 (IWASA TADANOBU) 12. März 1988

## Beschreibung

Die Erfindung betrifft eine Halterung für einen Elektromotor nach dem Oberbegriff des Anspruches 1.

Um eine Schwingungsentkopplung zu erhalten und damit eine Geräuschentstehung an einem Gehäuse oder einem Fahrzeug zu vermeiden, ist es bekannt (EP 0 545 003 A2), zwischen dem Polring eines Elektromotors und einem Motorhalter leistenförmige, gummielastische Elemente anzuordnen. Diese gummielastischen Elemente sind bei einem Ausführungsbeispiel mit dem Motorhalter formschlüssig verbunden. Um den Elektromotor in axialer Richtung zu sichern, wird bei dieser Ausführungsform vorgesehen, daß der Polring mit einer oder mehreren Aussparungen versehen ist, in die knopfartige Vorsprünge der leistenförmigen, als Abstützmittel dienenden Elemente eingreifen. Bei einem anderen Ausführungsbeispiel wird vorgesehen, daß der Motorhalter unter Zwischenfügen von gummielastischen Elementen mit dem Lagerbügel des Elektromotors verbunden ist.

DE-U 91 08 745 offenbart einen Haltekörper mit den Merkmalen des Oberbegriffs des Anspruchs 1.

Es ist auch bekannt (US-A-3 775 029), einen Elektromotor für ein Gebläserad in dem Gebläsegehäuse zu halten. Hierzu wird ein eine Ansaugöffnung bildender Teil mit nach innen gekrümmten Haltestegen versehen, die den Elektromotor aufnehmen. Bei einem Ausführungsbeispiel ist zwischen den Haltestegen und dem Elektromotor eine Hülse aus einem Elastomer vorgesehen.

Ferner ist es bekannt (DE-C 911 926), Kleinmaschinen, die auch Maschinenaggregate genannte werden, in einem zylindrischen Gehäuse mittels eines Ringes aus gummielastischem Material zu halten. Der Ring aus gummielastischem Material wird in axialer Richtung mittels Spannelementen derart gestaucht, daß er sich in radialer Richtung vergrößert und auf diese Weise die Kleinmaschine in dem Gehäuse fest spannt. Diese Einspannung oder Lagerung soll in der Nähe des Schwerpunktes der Kleinmaschine erfolgen.

Es ist ferner bekannt (DE-A-24 44 573), einen Elektromotor in einem topfartigen Aufnahmeteil anzuordnen. Bei dieser Bauart wird der Elektromotor zusammen mit einem ihn umgebenden Einsteckteil in das topfartige Aufnahmeteil eingesteckt. Das Einsteckteil, das aus einem Polyurethan-Elastomer gefertigt ist, hat mehrere sich an eine Stirnplatte anschließende Führungsstege, die sich in axialer Richtung über den Polring des Elektromotors erstrecken.

Der Erfindung liegt die Aufgabe zugrunde, eine Halterung der eingangs genannten Art zu schaffen, die es ermöglicht, den Elektromotor mit dem Gebläserad auszunuchten und anschließend erst den Adapter anzubringen.

Diese Aufgabe wird durch die Merkmale des Anspruches 1 gelöst.

Durch die Erfindung wird eine mehrteilige Halterung geschaffen, in die die gummielastischen Abstützelemente integriert sind. Die gummielastischen Abstütztelemente greifen nicht direkt an den Elektromotor an. Dieser wird vielmehr von dem Adapter der Halterung aufgenommen, der den Elektromotor sicher in axialer Richtung halten kann, ohne daß insbesondere an dem Polring Änderungen vorgenommen werden müssen. Da die Abstützelemente in einer gemeinsamen radialen Ebene angeordnet sind, die wenigstens annähernd durch den Schwerpunkt der Einheit aus Elektromotor und dem von diesem angetriebenen Element (Gebläserad) verläuft, kann diese Einheit aus Elektromotor und angetriebenem Element frei um ihren Schwerpunkt schwingen, da die Abstützelemente diese Bewegungen zulassen, ohne daß diese Schwingungen über den Motorhalter auf ein Gehäuse oder das Fahrzeug übertragen werden.

Dieser Adapter ist an dem Elektromotor anbringbar, ohne daß das Gebläserad von dem Elektromotor abgenommen werden muß. Dadurch ist es möglich, den Elektromotor mit dem Gebläserad auszuwuchten und anschließend erst den Adapter anzubringen.

Dieser Adapter ist vorteilhaft als Kunststofformteil herstellbar. Der zusätzliche Ring wirkt dabei als ein Federelement, das die Finger auseinanderhält, so daß der Adapter einfach auf den Polring aufgeschoben werden kann.

Bei einer baulich vorteilhaften Ausführungsform wird vorgesehen, daß der Adapter und der Motorhalter in axialer Richtung ineinandersteckbar sind, wobei die auf dem Adapter angebrachten Abstützelemente in Aufnahmen des Motorhalters eindringen und in diesen einrasten. Auf diese Weise ergibt sich eine sehr einfache Montage der Halterung.

Bei einer vorteilhaften Weiterbildung ist vorgesehen, daß die Finger auf ihrer Außenseite mit je einem in eine Aussparung eines Abstützelementes eingreifenden Vorsprung versehen sind. Damit wird in einfacher Weise eine formschlüssige Verbindung zwischen dem Adapter und den Abstützelementen verwirklicht.

In weiterer Ausgestaltung der Erfindung wird vorgesehen, daß der Motor mit axial begrenzten, schalenartig ein Abstützelement umgreifenden Aufnahmen versehen ist. Diese Aufnahmen in Verbindung mit Aussparungen für die Rastnasen der Abstützelemente führen zu einer formschlüssigen Verbindung zwischen Motorhalter und Abstützelementen.

Weitere Merkmale und Vorteile der Erfindung ergeben sich aus der nachfolgenden Beschreibung des in der Zeichnung dargestellten Ausführungsbeispiels.
Fig. 1 zeigt einen Axialschnitt durch einen (ungeschnittenen) Elektromotor eines Gebläserades mit einer bezüglich des Adapters nicht erfindungsgemäßen Halterung,
Fig. 2 eine Ansicht in Richtung des Pfeiles II auf eine Einzelheit des Adapters der Halterung,
Fig. 3 eine Axialansicht eines klotzförmigen Abstützelementes aus gummielastischem Material in größerem Maßstab und
Fig. 4 einen Axialschnitt durch eine erfindungsgemäße Halterung mit einem abgewandelten Adapter mit ebenfalls abgewandelten Abstützelementen.

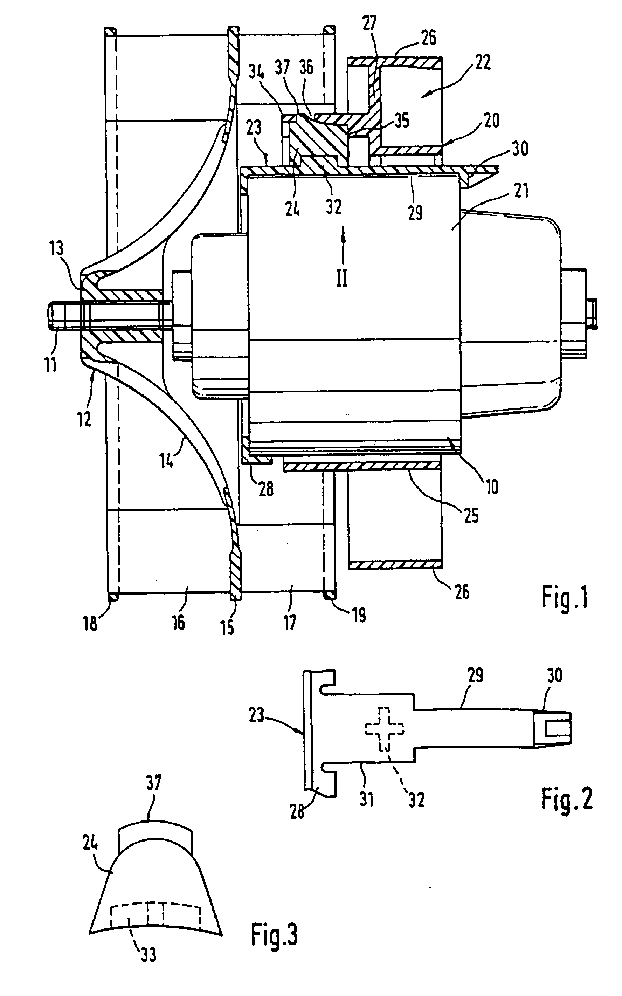

Der in Fig. 1 dargestellte Elektromotor (10) trägt auf seiner Welle (11) ein als einteiliges Spritzformteil aus Kunststoff hergestelltes Gebläserad (12). Das Gebläserad (12) besteht aus einer Nabe (13), die übergekrümmte Speichen (14) mit einem Ring (15) verbunden ist, von welchem beidseits in axialer Richtung gekrümmte Lüfterschaufeln (16, 17) abragen. Die Lüfterschaufeln sind an ihren Enden außen mit umlaufenden Stützringen (18, 19) versteift. Aufgrund des gekrümmten Verlaufes der Speichen (14) ist der Elektromotor (10) teilweise innerhalb des Gebläserades (12) angeordnet.

Um den Elektromotor (10) mit dem Gebläserad (12) an einem Gehäuse oder einem anderen Bauteil eines Fahrzeuges befestigen zu können, ist eine Halterung (20) vorgesehen, die den Elektromotor (10) an seinem Polring (21) hält. In die im wesentlichen aus zwei Teilen hergestellte Halterung, nämlich einem Motorhalter (22) und einem Adapter (23), sind mehrere gummielastische Abstützelemente (24) integriert, die die Einheit aus Elektromotor (10) und Gebläserad (12) bezüglich Schwingungen von den Bauteilen entkoppeln, an denen sie angebracht werden.

Der Motorhalter (22) weist zwei im wesentlichen konzentrische Ringe (25, 26) auf, die in Winkelabständen von 120° über Stege (27) miteinander verbunden sind. Der äußere Ring (26) ist mit mehreren, nicht dargestellten Laschen versehen, die Befestigungsmittel aufweisen, beispielsweise Durchstecklöcher für Schrauben.

Die Abstützelemente (24) aus gummielastischem Material sind zwischen dem Adapter (23) und dem Motorhalter (22) angeordnet. Sie besitzen eine axiale Länge, die etwa einem Drittel bis einem Viertel der axialen Länge des Polrings (21) entspricht.

Ihre Stärke in radialer Richtung entspricht etwa zwei Drittel bis drei Viertel ihrer axialen Länge. Wie in Fig. 3 zu sehen ist, besitzen sie eine angenähert trapezförmige Form in der axialen Ansicht, wobei die auf dem Adapter (23) aufstehende Grundfläche eine Breite hat, die etwa der axialen Länge entspricht. Die Abstützelemente (24), die bei dem Ausführungsbeispiel in einem Winkelabstand von 120° angeordnet sind, liegen in einer gemeinsamen Radialebene, die wenigstens annähernd durch den Schwerpunkt der Baueinheit aus Elektromotor (10) und Gebläserad (12) verläuft. Dadurch kann diese Baueinheit um ihren Schwerpunkt schwingen, wobei die Schwingungsbewegungen mittels der Abstützelemente (24) gedämpft werden.

Der Adapter (23) besitzt einen im Querschnitt winkelförmigen Ring, der ein Stimende des Polrings (21) des Elektromotors (10) einfaßt. Von diesem Ring (28) ragen Finger (29) ab, die sich entlang von Mantellinien des Polringes (21) erstrecken und die mit einer Rastnase (30) versehen sind, die das gegenüberliegende Stirnende des Polrings (21) umgreift. Die Finger (29) des aus Kunststoff hergestellten Adapters (23) sind in radialer Richtung zum Polring (21) elastisch bewegbar, so daß eventuell auftretende Durchmesserdifferenzen bezüglich des Polrings (21) ausgeglichen werden. Die mit einer Wölbung an die Außenkontur des Polrings (21) angepaßten Finger (29) besitzen einen verbreiterten Abschnitt (31), auf dessen dem Polring (21) abgewandter Außenseite ein kreuzförmiger Vorsprung (32) vorgesehen ist. Die gummielastischen Abstützelemente besitzen eine entsprechend kreuzförmig gestaltete Aussparung (33), mit der sie jeweils auf einen Vorsprung (32) aufgesteckt werden. Damit sind die Abstützelemente (24) in axialer Richtung und auch in Umfangsrichtung formschlüssig mit dem Adapter (23) verbunden. Darüberhinaus ist ihre Position auch eindeutig festgelegt.

Der Motorhalter (22) besitzt schalenförmige Aufnahmen (34), die den inneren Ring (25) unterbrechen und deren Anzahl der Anzahl der klotzförmigen Abstützelemente (24) entspricht. Diese schalenförmigen Aufnahmen (34), die die Abstützelemente (24) in Umfangsrichtung umgreifen, sind mit einer axialen Anschlägfläche (35) begrenzt. Des weiteren sind sie jeweils mit einer Aussparung (36) versehen, in die eine Rastnase (37) der Abstützelemente (24) eingreift. Die Rastnasen (37) besitzen auf der der Anschlagfläche (35) zugewandten Seite eine Anlaufschräge von etwa 45°. Die gegenüberliegende Fläche verläuft radial. Die Innenkontur der schalenförmigen Aufnahmen (34) verjüngt sich hin zu der axialen Anschlagfläche (35) leicht, beispielsweise mit einem Winkel von etwa 5°. Die Abstützelemente (24) besitzen eine entsprechende Kontur.

Bei dem Zusammenbau werden die Abstützelemente (24) zunächst mit ihren Aussparungen (33) auf die Vorsprünge (32) der Finger (29) des Adapters (23) aufgesteckt. Der Adapter (23) mit den Abstützelementen (24) wird dann in axialer Richtung in den Motorhalter (22) eingesteckt. Die Abstützelemente (24) besitzen ein leichtes Übermaß, so daß sie dabei bereits etwas elastisch deformiert werden. In axialer Richtung werden die Abstützelemente (24) so weit zusammengedrückt, daß die Rastnasen (37) in die Aussparungen (36) einrasten.

In der Regel wird es zweckmäßig sein, die gesamte Halterung (20) zunächst vorzumontieren und dann den Adapter (23) auf den Polring (21) des Elektromotors aufzustecken. In diesem Fall können bei der Vormontage die Finger (29) in radialer Richtung nachgeben, wenn der Adapter (23) in den Motorhalter (22) eingesteckt wird. Es ist jedoch auch möglich, den Adapter (23) zunächst auf dem Polring (21) des Elektromotors (10) zu montieren und anschließend die Abstützelemente (24) anzubringen und danach den Motorhalter (22) aufzuschieben.

Bei der dargestellten nicht erfindungsgemäßen Ausführungsform befindet sich der eine Stirnseite des Polrings (21) einfassende Ring auf der dem Gebläserad (12) zugewandten Seite, während die Rastnasen (30) auf der gegenüberliegenden Seite angeordnet sind.

Bei dem Ausführungsbeispiel enthält die Halterung (20) drei in einem Winkelabstand von 120° angeordnete Abstützelemente (24). Es ist jedoch selbstverständlich auch möglich, eine größere Anzahl von Abstützelementen (24) vorzusehen, wobei dann der Adapter (23) und der Motorhalter (22) entsprechend gestaltet werden. Ebenso ist es möglich, anstelle mehrerer Abstützelemente (24) ein ringförmig umlaufendes Abstützelement vorzusehen.

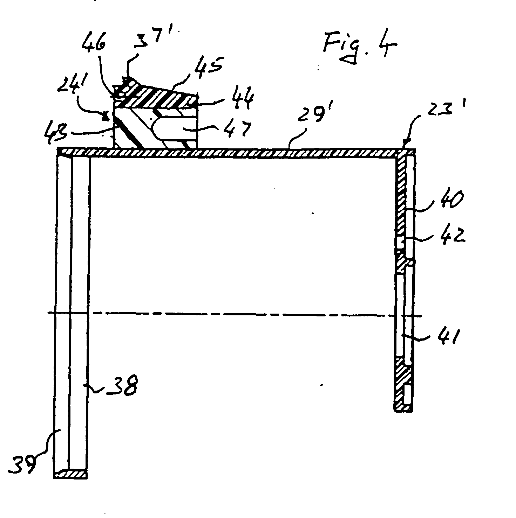

Der in Fig. 4 dargestellte Adapter (23') der erfindungsgemäßen Ausführungsform besteht im wesentlichen aus drei in einem Winkelabstand von 120° angeordneten Fingern (29'), die an ihrem dem nicht dargestellten Gebläserad (12) zugewandten Ende mittels eines Ringes (38) miteinander verbunden sind. der als eine Art Feder wirkt und die Finger (29') in diesem Bereich auseinanderhält. Der Ring (38), dessen vorderes Ende mit einer Fase (39) versehen ist, umgibt den Polring (21) des nicht dargestellten Elektromotors (10). An dem dem Ring (38) gegenüberliegenden Ende sind die Finger (29') mittels einer plattenartigen Verstrebung (40) miteinander verbunden, die quer zur Welle des Elektromotors (10) verläuft. Diese Verstrebung (40) besitzt eine zentrische Aussparung (41) für den Durchtritt der Motorwelle und/oder eines Lagers der Motorwelle. Darüber hinaus ist die Verstrebung (40) mit einer oder zwei Aufnahmen (42) versehen, in die Befestigungsmittel, insbesondere Schrauben einbringbar sind, mit denen der Adapter insbesondere an dem Lagerschild des Elektromotors befestigbar ist. Damit wird der Adapter (23') in axialer Richtung und in Umfangsrichtung an dem nicht dargestellten Elektromotor (10) fixiert. Der Adapter (23'), der als ein Kunststofformteil hergestellt ist, ist von der dem Gebläserad (12) gegenüberliegenden Seite auf den Polring (21) des Elektromotors (10) aufschiebbar, so daß sein Anbringen erfolgen kann, nachdem bereits das Gebläserad (12) auf der Motorwelle (11) angebracht und ausgewuchtet worden ist.

Auf den Fingern (29') sind jeweils Abstützelemente (24') angebracht, die auf die Finger (29') aufgeklebt oder aufvulkanisiert sind. Die Abstützelemente (24') bestehen aus einem gummielastischen Grundkörper (43), der mit einem dem Motorhalter (22) zugeordneten Gleitelement (44) versehen ist. Das Gleitelement (44) besteht aus einem härteren Kunststoff. Es ist mit einer Anlaufschrägen (45) und einer Rastnase (37') versehen, die einen den schalenförmigen Aufnahmen (34) des Motorhalters (22) zugeordnet ist. Da das Gleitelement (44) aus einem nichtgummielastischen Material hergestellt ist, verformt sich bei einem Einschieben des mit dem Adapter (23') versehenen Elektromtors (10) in die Motorhalterung (22) nur der Grundkörper (43) aus dem elastischen Material. Dadurch wird ein Einschieben wesentlich erleichtert, da es nur einen relativ geringen Kraftaufwand erfordert. Darüber hinaus ist es möglich, bei diesem Einschieben mit einem Werkzeug an das Gleitelement (44) anzugreifen, und dieses in den Motorhalter (22) hineinzudrücken. Zu diesem Zweck ist bei dem Ausführungsbeispiel vorgesehen, daß das Gleitelement (44) mit Aufnahmen (46) für ein Werkzeug versehen ist. Das Gleitelement (44) ist mit dem gummielastischen Grundkörper (43) verklebt oder auf diesen aufvulkanisiert. Der gummielastische Grundkörper (43) besitzt im Bereich der Einlaufschrägen (45) eine Aussparung (47), so daß in diesem Bereich sein Verformungswiderstand besonders gering ist und damit das Einschieben weiter erleichtert wird.

Bei den meisten Anwendungsfällen wird gefordert, daß der Elektromotor in einer bestimmten Winkellage in der Motorhalterung angeordnet wird, beispielsweise um die elektrischen Anschlußklemmen in einer vorgegebenen Position zu halten. Um diese winkelkorrekte Lage sicherzustellen, kann an einem der Finger (29, 29', 29") ein Vorsprung angeordnet werden, der einer Aussparung des Motorhalters (22) zugeordnet ist. Diese Aussparung des Motorhalters (22) ist so bemessen, daß nach dem Einbau zwischen dem Vorsprung des Adapters (23, 23', 23") und dem Motorhalter (22) keine unmittelbare Berührung vorhanden ist.

## Patentansprüche

1. Halterung für einen Elektromotor (10), insbesondere für einen Elektromotor für ein Gebläserad (12) einer Heizungs- oder Klimaanlage eines Kraftfahrzeuges, mit mehreren über den Umfang eines Polringes (21) verteilt angeordneten Abstützelementen (24') aus einem gummielastischen Material, wobei die Abstützelemente (24') zwischen einem an dem Elektromotor (10) wenigstens in axialer Richtung fixiert anbringbaren Adapter (23') und einem Motorhalter(22) angeordnet sind, und wobei die an dem Adapter (23') in axialer Richtung und in Umfangsrichtung fixierten Abstützelemente (24') in axialer Richtung und in Umfangsrichtung formschlüssig mit dem Motorhalter verbunden und in einer gemeinsamen radialen Ebene angeordnet sind, wobei die gemeinsame radiale Ebene wenigstens annähernd durch den axialen Schwerpunkt der Einheit aus Elektromotor (10) und dem von diesem angetriebenen Element, insbesondere dem Gebläserad (12), verläuft, und daß der Adapter (23') aus mehreren entlang von Mantellinien des Polrings (21) des Elektromotors (10) verlaufenden Fingern (29') besteht, dadurch gekennzeichnet daß, die Finger dem dem angetriebenen Element abgewandten Ende mit einer quer zur Motorwelle (11) verlaufenden Verstrebung (40) miteinander verbunden sind und an ihren der Verstrebung (40) abgewandten Enden in einen den Polring (21) des Elektromotors (10) umgebenden Ring (38) übergehen, und daß die Verstrebung (40) wenigstens eine Aufnahme (42) für ein den Adapter in axialer Richtung und in Umfangsrichtung an dem Elektromotor fixierendes Befestigungsmittel aufweist.

2. Halterung nach Anspruch 1, dadurch gekennzeichnet, daß die Abstützelemente (24') eine axiale Länge aufweisen, die einem Drittel bis etwa einem Viertel der axialen Länge des Polringes (10) entspricht.

3. Halterung nach Anspruch, dadurch gekennzeichnet, daß die radiale Stärke der Abstützelemente (24'), etwa zwei Dritteln bis etwa drei Vierteln ihrer axialen Länge entspricht.

4. Halterung nach einem der Ansprüche 1 bis 3 dadurch gekennzeichnet, daß der Adapter (23') und der Motorhalter (22) in axialer Richtung ineinandersteckbar sind, wobei die auf dem Adapter angebrachten Abstützelemente (24') in Aufnahmen (34) des Motorhalters eindringen und in diesen einrasten.

5. Halterung nach einem der Ansprüche 1 bis 4 dadurch gekennzeichnet, daß der Motorhalter (22) mit axial begrenzten, schalenartig ein Abstützelement (24') umgreifenden Aufnahmen (34) versehen ist.

6. Halterung nach einem der Ansprüche 1 bis 5, dadurch gekennzeichnet, daß die Abstützelemente (24') mit in etwa radial abragenden Pastnasen (37) jeweils in eine Aussparung (36) eher Aufnahme (34) eingreifen.

7. Halterung nach einem der Ansprüche 1 bis 6, dadurch gekennzeichnet, daß die Abstützelemente (24') einen gummielastischen Grundkörper (43) aufweisen, der mit einem dem Halter zugeordneten Gleitelement (44) versehen ist.

8. Halterung nach Anspruch 7, dadurch gekennzeichnet, daß das Gleitelement (44) eine schräge Gleitfläche (45) und eine Rastnase (37') aufweist.

9. Halterung nach Anspruch 1, dadurch gekennzeichnet, daß der Adapter ein Kunststofformteil ist.

## Claims

1. A mount for an electric motor (10), particularly for an electric motor for an impeller of a heating or air conditioning installation of a motor vehicle with several support elements (24') of rubber elastic material, distributed over the circumference of a pole ring, wherein the support elements (24') are mounted between an adaptor (23') fixedly attachable at least in axial direction on the electric motor (10), and a motor support (22), and wherein also the support elements (24') fixed on the adaptor (23') in an axial direction and in circumferential direction are connected at least in an axial direction to the motor support and are disposed in one common radial plane, the said common radial plane extending at least approximately through the axial centre of gravity of the unit constituted by the electric motor (10) and the element driven by it, particularly the fan impeller (12), the adaptor (23') consisting of a plurality of fingers (29') extending along generatrices of the pole ring (21) of the electric motor (10), characterised in that the fingers at the end remote from the driven element are connected to one another by means of bracing (40) extending crosswise to the motor shaft (11) and, at their ends remote from the bracing (40), merge into a ring (38) surrounding the pole ring (21) of the electric motor (10) and in that the bracing (40) comprises at least one housing (42) for a fixing means which secures the adaptor in an axial direction and in a peripheral direction on the electric motor.

2. A mount according to claim 1, characterised in that the support elements (24') have an axial length which corresponds to one-third up to about one-quarter of the axial length of the pole ring (10).

3. A mount according to claim 2, characterised in that the radial thickness of the support elements (24') corresponds to about two-thirds up to about three-quarters of their axial length.

4. A mount according to one of claims 1 to 3, characterised in that the adaptor (23') and the motor support (22) can be fitted into one another in an axial direction, the support elements (24') provided on the adaptor enter into and become locked in recesses (34) in the motor support.

5. A mount according to one of claims 1 to 4, characterised in that the motor support (22) is provided with axially defined recesses (34) which, in shell-like fashion, surround a support element (24').

6. A mount according to one of claims 1 to 5, characterised in that the support elements (24') have substantially radially projecting catches (37) each of which engages a cavity (36) in a recess (34).

7. A mount according to one of claims 1 to 6, characterised in that the support elements (24') comprise a rubber elastic base body (43) which is provided with a slider element (44) associated with the holder.

8. A mount according to claim 7, characterised in that the slider element (44) has a sloping sliding surface (45) and a catch (37').

9. A mount according to claim 1, characterised in that the adaptor is a plastic moulded part.

## Revendications

1. Support pour un moteur électrique (10), en particulier pour un moteur électrique pour une roue de ventilateur (12) d'une installation de chauffage ou de climatisation d'un véhicule motorisé, comportant plusieurs éléments d'appui (24',), en un matériau à élasticité du type caoutchouc, disposés répartis autour de la périphérie d'un anneau polaire (21), dans le cas duquel les éléments d'appui (24') sont disposés entre un adaptateur (23') qui peut s'appliquer contre le moteur électrique (10), fixé au moins selon la direction axiale, et un porte-moteur (22), et dans le cas duquel les éléments d'appui (24'), fixés sur l'adaptateur (23') selon la direction axiale et selon la direction périphérique, sont reliés par complémentarité de forme avec le porte-moteur, selon la direction axiale et selon la direction périphérique et sont disposés dans un plan radial commun, le plan radial commun passant au moins approximativement par le centre de gravité axial de l'ensemble constitué du moteur électrique (10) et de l'élément, en particulier la roue de ventilateur (10), qu'il entraîne, et l'adaptateur (23') étant constitué de plusieurs doigts (29') qui s'étendent le long de la direction de l'anneau polaire (21) du moteur électrique (10),
caractérisé par le fait qu'à l'extrémité opposée à l'élément entrainé, les doigts sont réunis l'un à l'autre au moyen d'une entretoise (40) orientée perpendiculairement à l'arbre (11) du moteur et, à leur extrémité opposée à l'entretoise (40), se convertissent en un anneau (38) qui entoure l'anneau polaire (21) du moteur électrique (10) et que l'entretoise (40) présente au moins un réceptacle (42) pour un moyen de fixation fixant l'adaptateur sur le moteur électrique selon la direction axiale et selon la direction périphérique.

2. Support selon la revendication 1, caractérisé par le fait que les éléments d'appui (24') présentent une longueur axiale qui correspond à un tiers jusqu'à environ un quart de la longueur axiale de l'anneau polaire (10).

3. Support selon la revendication 2, caractérisé par le fait que l'épaisseur radiale des éléments d'appui (24') correspond à peu près à deux tiers jusqu'à environ trois quart de leur longueur axiale.

4. Support selon l'une des revendications 1 à 3, caractérisé par le fait que l'adaptateur (23') et le porte-moteur (22) peuvent s'enficher l'un dans l'autre selon la direction axiale, les éléments d'appui (24') appliqués sur l'adaptateur pénétrant dans des réceptacles (34) du porte-moteur et s'y crantant.

5. Support selon l'une des revendications 1 à 4, caractérisé par le fait que le porte-moteur (22) présente des réceptacles (34) limités axialement et enserrant, à la façon d'une cuvette, un élément d'appui (24').

6. Support selon l'une des revendications 1 à 5, caractérisé par le fait que les éléments d'appui (24') viennent chacun, par des talons de crantage (37) qui saillent à peu près radialement, en prise dans un évidement (36) d'un réceptacle (34).

7. Support selon l'une des revendications 1 à 6, caractérisé par le fait que les éléments d'appui (24') présentent un corps de base (43) à élasticité de type caoutchouc, qui est muni d'un élément coulissant (44) correspondant au porte-moteur.

8. Support selon la revendication 7, caractérisé par le fait que l'élément coulissant (44) présente une surface de coulissement oblique (45) et un talon de crantage (37').

9. Support selon la revendication 1, caractérisé par le fait que l'adaptateur est une pièce de forme en plastique.
